# EUROPÄISCHE PATENTANMELDUNG

(11) **EP 0 616 183 A1**
(43) Veröffentlichungstag der Anmeldung: **21.09.1994**
(21) Anmeldenummer: 94100537.3
(22) Anmeldetag: 15.01.1994
(51) Int. Cl.: F27D 3/00, B65G 49/08, B28B 11/00

(54) **Vorrichtung zum Beschicken von Brennöfen**

(30) Priorität: 15.01.1993 DE 4300990
(71) Anmelder: HEINRICH ZEIDLER, Maschinenfabrik GmbH & Co. KG, D-95100 Selb (DE)
(72) Erfinder: Ullrich, Wolfgang, Ing., D-95173 Schönwald (DE)
(74) Vertreter: Münich, Wilhelm, Dr.

(57) **Zusammenfassung**

Beschrieben wird eine Vorrichtung zum Beschicken von Brennöfen, mit Brennhilfsmitteln, die das zu brennende Gut in wenigstens zwei Ebenen über einander auf Auflageflächen aufnehmen und die mit dem zu brennenden Gut auf eine Transporteinheit setzbar sind, die wenigstens ein Brennhilfsmittel mit dem zu brennenden Gut in den Brennofen überführt.

Die Erfindung zeichnet sich dadurch aus, daß zum Beladen und/oder Entladen der Brennhilfsmittel (14, 16) ist eine Umlaufeinheit (26) vorgesehen, die wenigstens zwei Brennhilfsmittel aufnimmt, und diese wenigstens zwischen einer Beladestation (34) und/oder einer Entladestation (30) bewegt,
daß wenigstens ein Schieber (60) vorgesehen ist, der in der Beladestation das zu brennende Gut (18) von einer Zuführeinheit (44) auf eine Auflagefläche des in der Beladestation befindlichen Brennhilfsmittels und/oder in der Entladestation das gebrannte Gut von der Auflagefläche des Brennhilfsmittels auf eine Übernahmeeinheit (42 oder 62) schiebt,
und daß eine Umsetzeinheit (8) die Brennhilfsmittel zwischen der Transporteinheit und der Umlaufeinheit umsetzt.

## Beschreibung

Die Erfindung bezieht sich auf eine Vorrichtung zum Beschicken von Brennöfen mit Brennhilfsmitteln, die das zu brennende Gut in wenigstens zwei Ebenen übereinander auf Auflagelfächen aufnehmen, und die mit dem zu brennenden Gut auf eine Transporteinheit setzbar sind, die wenigstens ein Brennhilfsmittel mit dem zu brennenden Gut in den Brennofen überführt.

Derzeit werden Brennhilfsmittel mit mehreren Auflageflächen, die bspw. aus ebenen Sinterkeramikplatten und dazwischenliegenden Stützteilen bestehen können, zumeist von Hand mit dem zu brennenden Gut beladen. Derartige Brennhilfsmittel werden auch als "Setter" bezeichnet, wenn sie im gestapelten Zustand einen Zugriff zum zu brennenden Gut zulassen.

Es sind zwar mehrfach Vorschläge für die automatisierte Beladung von Vorrichtungen zum Beschicken von Brennöfen bekannt geworden, diese bekannten Vorschläge sind jedoch entweder nicht für das Beladen von Settern geeignet oder sie sind vergleichsweise aufwendig und damit teuer:
So ist aus der DE-A-23 17 679 eine Vorrichtung zur Stapelung von Fliesen, Kacheln oder dgl. auf einer Abstellfläche bekannt, die eine Greifvorrichtung aufweist, die in der X- und Y-Achse beweglich sowie höhenverstellbar und drehbar ist. Eine derartige Greifvorrichtung ist für das Beladen von Brennhilfsmitteln mit mehreren Auflageflächen jedoch nur bedingt geeignet.

Weiterhin ist aus der DE-A-27 38 681 eine Vorrichtung zum Beschicken oder Entleeren von Brennkapsel-Stapeln bekannt, bei der das zu brennende Gut über ein höhenbewegliches Fließband einer Sammelvorrichtung zugeführt wird. Aus der Sammelvorrichtung wird das zu brennende Gut an eine Hilfskassette übergeben und von dieser dem Brennkapsel-Stapel zugeführt. Hierdurch erhöht sich nicht nur die Beladezeit, sondern es entsteht auch eine vergleichsweise hoher Material- und Kostenaufwand.

Aus der DE-A-34 31 745 ist eine Vorrichtung zum Beschicken von Brennöfen mit Kapseln, in denen sich das Brenngut befindet und die zu Kapselstapel zusammengesetzt sind bekannt. Diese Vorrichtung hat Greifer zum Umsetzen jeweils einer Kapsel mit gebranntem Gut von einem im Kapselstapel an einer Endstapelstation zu einer Anfangsstation eines Kapselförderers zum Weiterfördern des gebrannten Guts zu einer Abführstation, zum Umsetzen ungebrannten Guts von einer Zuführstation auf eine leere Kapsel in einer Endstation des Kapselförderers und zum Umsetzen der neu besetzten Kapsel zu einem Kapselstapel an einer Stapelstation. Sämtliche sechs genannten Stationen sind rings um eine gemeinsame Drehachse angeordnet, um die sämtliche Greifer drehbar sind. Die in der DE 34 31 745 A1 beschriebene Vorrichtung benutzt Greifer zum Umsetzen von Kapseln, wodurch die gesamte Vorrichtung aufwendig konzipiert und zu Handhaben ist. Außerdem haben Greifer den Nachteil, daß sie leicht störanfällig sind.

Aus der DE-C-37 26 450 ist eine Vorrichtung zum Beladen von Brennkapseln mit keramischen Gut bzw. zum Entladen des keramischen Gutes aus dem Brennkapseln bekannt. Die Vorrichtung weist ein Drehkreuz auf, daß an Armen angeordnete Greifköpfe mit Saugköpfen und Greifarmen versehen ist, die zum Greifen des keramischen Gutes bzw. der Brennkapseln vorgesehen sind. Eine erste Fördereinrichtung der Vorrichtung dient zum Transport des keramischen Gutes. Eine zweite Fördereinrichtung ist zum Transport der Brennkapseln vorgesehen. Eine dritte Fördereinrichtung dient zum Transport der mit keramischen Gut bestückten Brennkapseln. Auf den Fördereinrichtungen sind die Brennkapseln zu Säulen aufeinander gestapelt. Die zweite und dritte Fördereinrichtung weisen nebeneinander parallel ausgerichtete gitterrostförmige Stege konstanter Teilung auf. Die Brennkapseln ruhen auf den Stegen. Das erste und zweite Hubgerät weisen nebeneinander parallel angeordnete Finger auf, deren Teilung der Teilung der Stege entspricht.

Auch diese Vorrichtung ist aufwendig und kompliziert aufgebaut; die Verwendung von Greifköpfen mit Saugköpfen und Greifarmen macht die gesamte Vorrichtung nur unnötig komplizierter und auch störanfälliger.

Der Erfindung liegt die Aufgabe zugrunde, eine Vorrichtung zum Beschicken von Brennöfen mit Brennhilfsmitteln, die insbesondere als "Setter" ausgebildet sein können, anzugeben, bei der die Brennhilfsmittel automatisiert schnell, einfach und komplikationsfrei mit dem zu brennenden Gut beladbar sind.

Eine erfindungsgemäße Lösung dieser Aufgabe ist im Patentanspruch 1 angegeben. Weiterbildungen der Erfindung sind Gegenstand der Unteransprüche.

Die erfindungsgemäße Vorrichtung weist zum Beladen und Entladen der Brennhilfsmittel eine Umlaufeinheit auf, die wenigstens zwei Brennhilfsmittel aufweist, und diese wenigstens zwischene einer Beladestation und einer Entladestation bewegt. Diese Umlaufeinheit kann bspw. ein im "Karree" arbeitender Hängeförderer sein. Besonders bevorzugt ist es jedoch, wenn die Umlaufeinheit einen Drehtisch aufweist, auf dem Plätze für die Brennhilfsmittel vorgesehen sind, und der die Brennhilfsmittel in die verschiedenen Stationen überführt.

Gemäß den Ansprüchen 2 bis 4 kann die Umlaufeinheit zusätzlich zu der Beladestation und der Entladestation eine Übergabestation, in der die Umsetzeinheit zu beladende bzw. zu entladende Brennhilfsmittel zwischen Transporteinheit und Umlaufeinheit umsetzt, eine Wechselstation, in der ein Wechseln der Brennhilfsmittel erfolgen kann und/oder wenigstens eine Pufferstation aufweisen.

Ferner weist die erfindungsgemäße Vorrichtung wenigstens einen Schieber auf. Gemäß Anspruch 6 ist es jedoch bevorzugt, wenn sowohl in der Beladestation als auch der Entladestation jeweils einen Schieber vorgesehen ist. Der Schieber in der Beladestation schiebt das zu brennende Gut von einer Zuführeinheit auf eine Auflagefläche, des in der Beladestation befindlichen Brennhilfsmittels. Während der Schieber in der Entladestacion das gebrannte Gut von der Auflagefläche des in der Endladestation befind-lichen Brennhilfsmittels auf eine Übernahmeeinheit schiebt.

Zum Umsetzen der Brennhilfsmittel zwischen der Transporteinheit, die bspw. ein Ofenwagen sein kann, und der Umlaufeinheit ist eine Umsetzeinheit vorgesehen, die insbesondere einen wenigstens zweiachsigen Handhabungsarm aufweisen kann (Anspruch 13). Bevorzugt ist es jedoch, wenn die Umsetzeinheit gemäß Anspruch 14 eine Portaleinheit für den Ofenwagen odgl. und einen an den Portal verschiebbar angeordneten Greifarm aufweist, der ein Handhabungswerkzeug, bspw. eine Spannzange (Anspruch 15) für die Brennhilfsmittel trägt.

Durch die in den Ansprüchen 7ff angegebenen Weiterbildungen gemäß denen in der Beladestation und/oder Entladestation Übergabe- bzw. Übernahmeeinheiten vorgesehen sind, in denen das zu brennende Gut in mehreren Ebenen, deren Zahl der Zahl der Ebenen des Brennhilfsmittels entspricht, übereinandergestapelt ist, wird die Taktzeit der erfindungsgemäßen Vorrichtung weiter erhöht. Bei dieser Ausbildung weisen die Schieber für jede Ebene ein Schubelement auf, so daß das gesamte in der Übergäbeeinheit bzw. Übernahmeinheit vorhandene Gut in einem Ausschubvorgang, d.h. in einem Taktschritt überführt werden kann.

Vorteilhafte Ausgestaltungen der Übergabe- bzw. Übernahmeeinheit sind in den Ansprüchen 9 bis 11 angegeben.

Die erfindungsgemäße Vorrichtung weist bevorzugt als Förderbänder ausgebildete Transporteinheiten auf, die das Gut aus vorgeschalteten Bearbeitungsstationen in die Vorrichtung bzw. aus der Vorrichtung in nachgeschaltete Bearbeitungsstationen, wie bspw. Schleifstationen überführt.

Die Erfindung wird nachstehend ohne Beschränkung des allgemeinen Erfindungsgedankens anhand von Ausführungsbeispielen unter Bezugnahme auf die Zeichnung exemplarisch beschrieben, auf die im übrigen bezüglich der Offenbarung aller im Text nicht näher erläuterten erfindungsgemäßen Einzelheiten ausdrücklich verwiesen wird. Es zeigen:
- Fig. 1: eine Aufsicht auf eine erfindungsgemäße Vorrichtung,
- Fig. 2: eine Seitenansicht einer Umsetzeinheit mit einer Transporteinheit,
- Fig. 3: die Ausbildung einer Beladestation, und
- Fig. 4: die Ausbildung einer Entladestation.

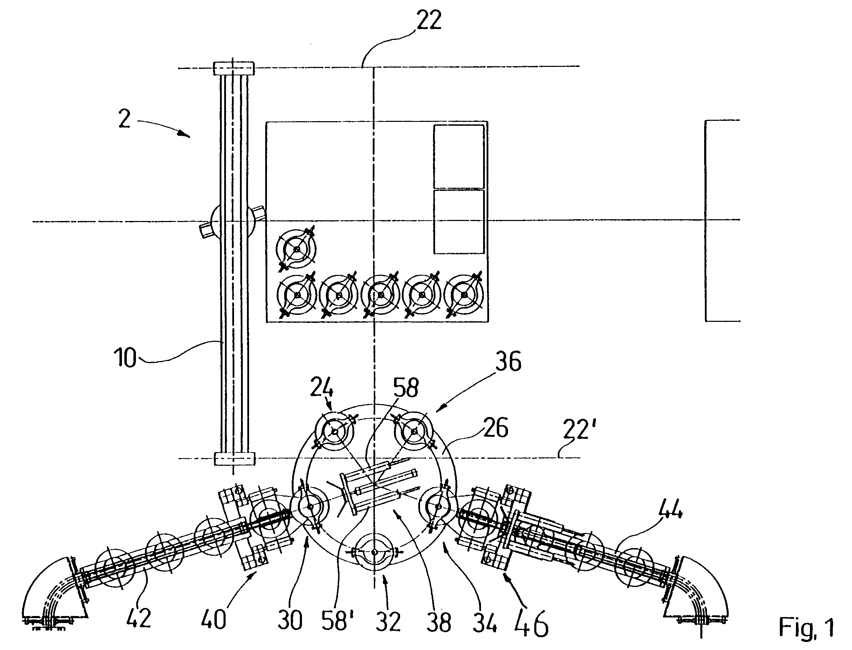

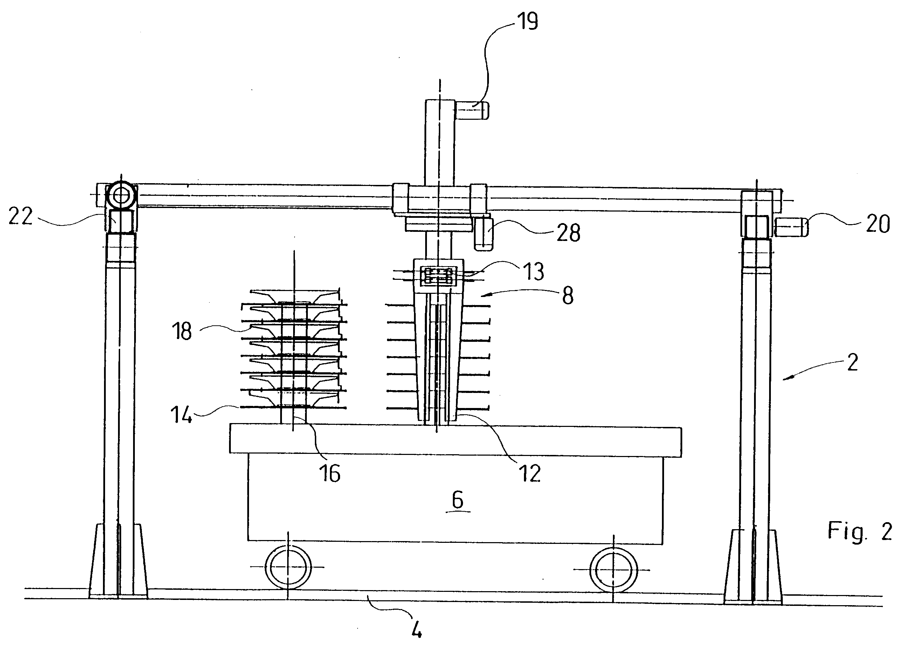

Die Fig. 1 und 2 zeigen eine Umsetzeinheit und eine als Drehteller ausgebildete Umlaufeinheit. Die Umsetzeinheit weist ein Portal 2 auf, das eine Führung 4 der Ofenspur überspannt, auf der Ofenwagen 6 einen vorgegebenen Weg durch einen nicht dargestellten Ofen zurücklegen. Die Ofenwagen 6 fahren im Taktbetrieb und bleiben durch entsprechende Steuerelemente in der dargestellten Position stehen. Ferner weist die Umsetzeinheit einen mehrachsigen Handhabungsarm 8 auf (der entlang einer Führung 10 beweglich ist, welche wiederum am Portal beweglich ist). Der Handhabungsarm 8 ist damit in der Horizontalebene beweglich und darüberhinaus aufgrund seiner mehrachsigen Ausbildung abwinkel- und drehbar. Zur Bewegung des Handhabungsarms sind eine Reihe von Stellmotoren 19, 20 und 28 vorgesehen. An seinem Ende trägt der Handhabungsarm 8 eine Zange 12, die über einen Kolbenzylindereinheit 13 derart betätigbar ist, daß sie die Brennhilfsmittelplatten 14 und deren Stützteile 16, zusammenspannen kann. Hierdurch ist es möglich, daß der Handhabungsarm 8 die Brennhilfsmittelplatten 14 nebst Stützteilen 16 anneben kann, wobei das zu brennende Gut 18 - bei dem dargestellten Ausführungsbeispiel Teller - lose auf den Platten 14 aufliegt. Der Handhäbungsarm 8 wird auf den Laufschienen 22 zu einer Übergabeposition 24 an der als Drehtisch 26 ausgebildeten Umlaufeinheit gebracht. Bei abweichender Positionslage der Brennhilfsmittel bzw. der Setter kann diese durch eine entsprechende Drehung des Handhabungsarms ausgeglichen werden.

Der Drehtisch 26 ist mit fünf um jeweils 72° versetzten Stationen versehen, nämlich einer Übergabestation 24, einer Entladestation 30, einer Wechselstation 32, einer Beladestation 34 und einer Pufferstation 36. Befindet sich ein Setter bzw. ein Brennhilfsmittel in der Endladestation 30, so drückt ein Schieber 38 das zu brennende Gut, also bei den dargestellten Ausführungsbeispiel die Teller auf eine Übernahmeeinheit 40 von der sie einzelnen auf ein Förderband 42 abgesetzt werden. Das Förderband überführt die Teller zu einer nachgeordneten Bearbeitungsvorrichtung, bspw. zur Bearbeitung der Füße an eine nicht dargestellt Schleifvorrichtung.

Ferner ist auch an der Beladestation 34 ein Förderband 44 vorgesehen, das das zu brennende Gut, also bei den gezeigten Ausführungsbeispiel die Teller, bpsw. von einer Glasierstation an die Übergabeeinheit 46 transportiert.

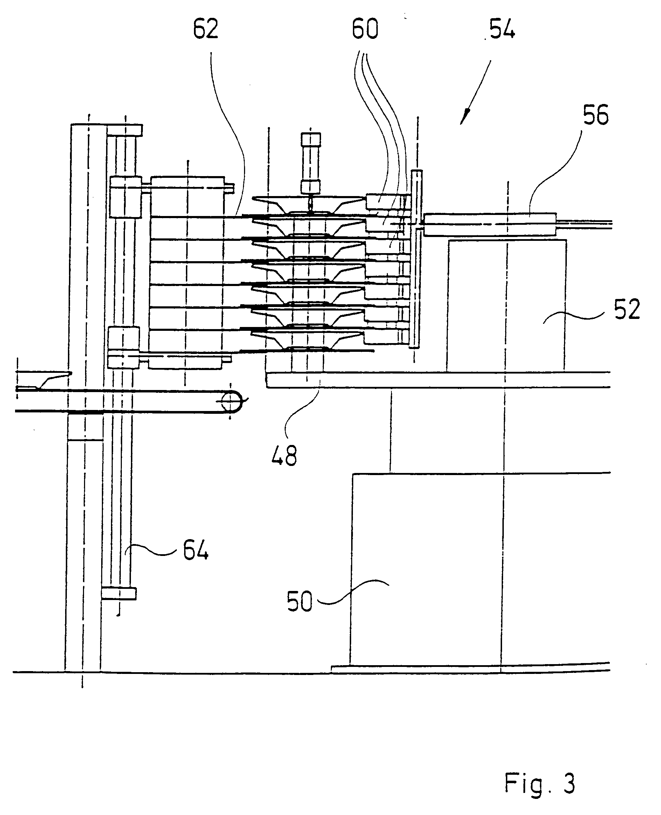

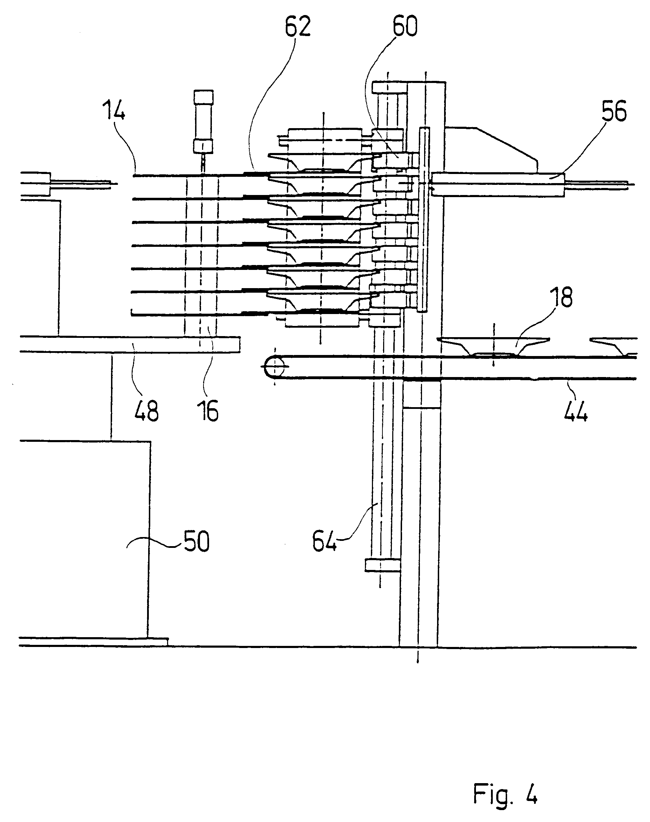

Die Fig. 3 und 4 zeigen die Übergabeeinheit 46 und die Übernahmeeinheit 40 im Detail und insbesondere das Zusammenwirken mit dem Drehtisch 26. Die Platte 48 am Drehtisch ist durch ein Schaltgetriebe mit einem Antrieb im Sockel 50 verbunden. Der nicht rotierende Aufsatz 52 trägt die Ausschubvorrichtung 54 mit ihrer Kolbenzylindereinheit 56 und den beiden Führungen 58, 58. Das Ende der Kolbenstange ist über Verbindungselement 59 mit 7 Schubblechen mit gespreizter U-Form verbunden. Fährt die Kolbenstange aus, so drücken die Schubbleche 60 die Teller aus dem Setter und schieben sie auf die geschlitzten Stapelzungen 62 der magazinartigen Übernahmeeinheit 40. Dazu hat die an Vertikalführungen 64 heb- und senkbare Übernahmeeinheit 40, insbesondere deren horizontalbewegliche Stapelzungen, eine Übergabestellung eingenommen, in der die Stapelzungen 62 am unteren Randbereich der Brennhilfsmittelplatten 14 anliegen.

Vorstehend ist die Erfindung anhand eines Ausführungsbeispiels beschrieben worden. Innerhalb des allgemeinen Erfindungsgedankens, wie er der Beschreibung und den Ansprüchen entnehmbar ist, sind selbstverständlich die verschiedensten Abwandlungen möglich:

So bestehen die Brennhilfsmittel bei dem gezeigten Ausführungsbeispiel aus den Brennhilfsmittelplatten 14 und den Stützteilen 16, die wiederum aus einzelnen Distanzstücken bestehen. Beispielsweise können die Stützteile 16 in an sich bekannter Weise auch aus einem inneren durchgehenden Stützteil und mehreren, aufgesetzten oder angesetzten Distanzstücken bestehen.

## Patentansprüche

1. Vorrichtung zum Beschicken von Brennöfen, mit Brennhilfsmitteln (14,16), die das zu brennende Gut (18) in wenigstens zwei Ebenen über einander auf Auflageflächen aufnehmen und die mit dem zu brennenden Gut (18) auf eine Transporteinheit setzbar sind, die wenigstens ein Brennhilfsmittel (14,16) mit dem zu brennenden Gut (18) in den Brennofen überführt,
mit folgenden Merkmalen:
- zum Beladen und/oder Entladen der Brennhilfsmittel (14, 16) ist eine Umlaufeinheit (26) vorgesehen, die wenigstens zwei Brennhilfsmittel (14,16) aufnimmt, und diese wenigstens zwischen einer Beladestation (34) und/oder einer Entladestation (30) bewegt,
- es ist wenigstens ein Schieber (60) vorgesehen, der in der Beladestation (34) das zu brennende Gut (18) von einer Zuführeinheit (44) auf eine Auflagefläche des in der Beladestation (34) befindlichen Brennhilfsmittels (14,16) und/ oder in der Entladestation das gebrannte Gut von der Auflagefläche des Brennhilfsmittels auf eine Übernahmeeinheit (42 oder 62) schiebt,
- eine Umsetzeinheit (8) setzt die Brennhilfsmittel (14,16) zwischen der Transporteinheit und der Umlaufeinheit (26) um.

2. Vorrichtung nach Anspruch 1,
dadurch **gekennzeichnet**, daß die Umlaufeinheit (26) zusätzlich wenigstens eine Übergabestation (24) aufweist, in der die Umsetzeinheit zu beladende bzw. zu entladende Brennhilfsmittel (14,16) zwischen Transporteinheit und Umlaufeinheit (26) umsetzt.

3. Vorrichtung nach Anspruch 1 oder 2,
dadurch **gekennzeichnet**, daß die Umlaufeinheit (26) wenigstens eine Wechselstation (32) aufweist, in der ein Wechseln der Brennhilfsmittel erfolgen kann.

4. Vorrichtung nach einem der Ansprüche 1 bis 3,
dadurch **gekennzeichnet**, daß die Umlaufeinheit (26) wenigstens eine Pufferstation (36) aufweist.

5. Vorrichtung nach einem der Ansprüche 1 bis 4,
dadurch **gekennzeichnet**, daß die Umlaufeinheit 26 einen Drehtisch aufweist, auf dem die Plätze für Brennhilfsmittel vorgesehen sind, und der die Brennhilfsmittel in die verschiedenen Stationen überführt.

6. Vorrichtung nach einem der Ansprüche 1 bis 5,
dadurch **gekennzeichnet**, daß die Beladestation (34) und die Entladestation (30) jeweils einen Schieber aufweisen.

7. Vorrichtung nach einen der Ansprüche 1 bis 6,
dadurch **gekennzeichnet**, daß die Beladestation eine Übergabeeinheit (46) aufweist, in der das zu brennende Gut in mehreren Ebenen, deren Zahl der Zahl der Ebenen des Brennhilfsmittels entspricht, übereinander gestapelt ist, und daß der Schieber für jede Ebene ein Schubelement aufweist, so daß das gesamte in der Übergabeeinheit gestapelte Gut in einem Aussschubvorgang in das jeweilige Brennhilfsmittel überführbar ist.

8. Vorrichtung nach einem der Ansprüche 1 bis 7,
dadurch **gekennzeichnet**, daß die Entladestation eine Übernahmeeinheit (40) mit mehreren Ebenen aufweist, deren Zahl der Zahl der Ebenen des Brennhilfsmittels entspricht, und
daß der Schieber für jede Ebene ein Schubelement aufweist, so daß das gebrannte Gut in einem Ausschubvorgang aus dem Brennhilfsmittel in die Übernahmeeinheit überführbar ist.

9. Vorrichtung nach Anspruch 7 oder 8,
dadurch **gekennzeichnet**, daß die Übergabeeinheit und die Übernahmeeinheit gegabelte Aufnahmefächer aufweisen und in Richtung senkrecht zur Erstreckung der Aufnahme-Ebenen verfahrbar sind, so daß das Gut von der Transporteinheit aufnehmbar bzw. auf der Transporteinheit absetzbar ist.

10. Vorrichtung nach Anspruch 9,
dadurch **gekennzeichnet**, daß die Übergabeeinheit und die Übernahmeeinheit an Vertikalführungen (64) angebracht sind, die einen Taktvorschub ermöglichen.

11. Vorrichtung nach einem der Ansprüche 1 bis 10,
dadurch **gekennzeichnet**, daß der Schieber wenigstens ein U-förmiges Schubelement aufweist, das das jeweils zu überführende Gut umgreift.

12. Vorrichtung nach einem der Ansprüche 1 bis 11,
dadurch **gekennzeichnet**, daß die Transporteinheiten Förderbänder (42,44) sind, die das Gut aus vorgeschalteten Bearbeitungsstationen in die Vorrichtung bzw. aus der Vorrichtung in nachgeschaltete Bearbeitungsstationen überführen.

13. Vorrichtung nach einem der Ansprüche 1 bis 12,
dadurch **gekennzeichnet**, daß die Umsetzeinheit einen wenigstens zweiachsigen Handhabungsarm aufweist.

14. Vorrichtung nach Anspruch 13,
dadurch **gekennzeichnet**, daß die Umsetzeinheit eine Portaleinheit (2) für Ofenwagen (6) oder dgl. und einen an dem Portal verschiebbar angeordneten Greifarm (8) aufweist, der ein Handhabungswerkzeug für die Brennhilfsmittel trägt.

15. Vorrichtung nach Anspruch 14,
dadurch **gekennzeichnet**, daß das Handhabungswerkzeug eine Spannzange ist.
